# FASCICULE DE BREVET EUROPEEN

(11) **EP 3 887 711 B1**
(45) Date de publication et mention de la délivrance du brevet: **19.10.2022**
(21) Numéro de dépôt: 19808827.0
(22) Date de dépôt: 27.11.2019
(51) Int. Cl.: F17C 1/16

(54) **ENVELOPPE INTERNE POUR RESERVOIR DE STOCKAGE DE FLUIDE SOUS PRESSION POUR VEHICULE AUTOMOBILE**
INNENGEHÄUSE FÜR EINEN DRUCKFLÜSSIGKEITSVORRATSBEHÄLTER FÜR EIN KRAFTFAHRZEUG
INTERNAL ENCLOSURE FOR PRESSURIZED FLUID STORAGE TANK FOR A MOTOR VEHICLE

(30) Priorité: 30.11.2018 FR 1872197
(43) Date de publication de la demande: 06.10.2021
(73) Titulaire: PLASTIC OMNIUM NEW ENERGIES FRANCE, 69007 Lyon (FR)
(72) Inventeur: WAHL, Jeremy, 1130 Bruxelles (BE); CRIEL, Bjorn, 1130 Bruxelles (BE); DE KEYZER, Pierre, 1130 Bruxelles (BE)
(74) Mandataire: LLR
(86) Numéro de dépôt international: PCT/EP2019/082764
(87) Numéro de publication internationale: WO 2020/109398

(56) Documents cités:
- EP-A1- 1 989 477
- EP-A1- 2 788 662
- WO-A1-2009/128818
- DE-A1-102014 009 341
- DE-A1-102014 009 343
- FR-A1- 3 035 173
- US-A- 3 843 010

## Description

La présente invention concerne le domaine des réservoirs de stockage de fluide sous pression, notamment pour véhicules automobiles. Plus précisément, l'invention concerne une enveloppe interne pour réservoir de stockage de fluide sous pression pour véhicule automobile.

On connaît déjà dans l'état la technique, des réservoirs pour fluide sous pression comportant une enveloppe interne, également appelée liner, laquelle est munie d'un col assurant une étanchéité avec une embase au moyen d'un joint. Cependant, un problème est que le col se déforme sous l'action du joint et génère des fuites. Par exemple, le document FR 3 035 173 A1 divulgue un procédé de fabrication d'une coque interne de réservoir pour fluide sous pression, et les documents DE 10 2014 009341 A1 et DE 10 2014 009343 A1 divulguent chacun un réservoir pour fluide sous pression.

Une solution pour assurer l'étanchéité serait de prévoir un matériau plus résistant mais un inconvénient est que l'enveloppe interne serait plus épaisse, plus lourde ou plus chère. Une autre solution serait de prévoir un insert sur le col, par exemple un insert métallique, mais un tel insert est également lourd et complexifie le processus de fabrication.

L'invention a notamment pour but de proposer une enveloppe interne évitant des fuites tout en étant relativement légère.

A cet effet l'invention a pour objet une enveloppe interne pour réservoir de stockage de fluide sous pression pour véhicule automobile, caractérisée en ce qu'elle comporte :
- un corps creux comportant au moins une couche réalisée dans un premier matériau polymère,
- un col disposé sur le corps creux et délimitant une ouverture du corps creux, le col étant configuré pour recevoir une pièce d'interface rapportée sur le col de façon étanche grâce à un joint d'étanchéité disposé entre le col et la pièce d'interface, le col étant réalisé dans un matériau composite composé d'un deuxième matériau polymère chargé de fibres de renfort,
- le matériau composite présentant une résistance à la déformation supérieure à la résistance à la déformation du premier matériau polymère, et
le col étant relié au corps creux par enchevêtrement moléculaire de chaînes polymériques du premier matériau polymère et de chaînes polymériques du deuxième matériau polymère.

Ainsi, la zone du col nécessitant une résistance à la déformation plus élevée est réalisée de manière simple, économique et sans augmentation significative du poids de l'enveloppe interne, grâce à l'utilisation d'un col réalisé en un matériau composite.

En outre, l'utilisation, pour le corps creux et le col, de matériaux polymères réalisant un enchevêtrement moléculaire de chaînes polymériques entre eux, permet au col d'être assemblé de manière particulièrement résistante sur le corps creux de l'enveloppe.

Le risque de fuite est également plus limité, du fait d'une résistance à la déformation plus élevée. En particulier, lors d'une opération de maintenance, dans le cas du remplacement d'éléments au contact du col comme par exemple une soupape ou un joint d'étanchéité, l'enveloppe interne se déforme moins et a ainsi une probabilité plus élevée de pouvoir être réutilisée, par exemple avec une nouvelle soupape ou un nouveau joint.

Par « enchevêtrement moléculaire de chaînes polymériques » d'un premier matériau polymère et d'un second matériau polymère, on comprend deux matériaux polymères pressés ensemble à l'état fondu de telle manière qu'un phénomène d'autohésion se produit, la température de fusion des deux matériaux polymères pressés étant mesurée à l'aide de la norme ISO 3146:2000. Une telle autohésion est le phénomène décrivant la diffusion intermoléculaire et l'enchevêtrement de chaînes moléculaires à travers une interface polymère formant une liaison forte. A la différence de l'adhésion, laquelle concerne l'énergie de surface (ou des liaisons chimiques secondaires entre deux matériaux soit similaires soit non similaires), l'autohésion concerne l'enchevêtrement de chaînes moléculaires et les liaisons secondaires pour des chaînes polymères de matériaux similaires, c'est-à-dire de matériaux compatibles chimiquement. Dans des conditions idéales, la diffusion est complète lorsque l'interface entre les deux matériaux polymères n'est plus discernable de la masse de chacun des deux matériaux polymères. Par exemple, concernant deux matériaux polymères thermoplastiques, une fois que le contact polymère thermoplastique - polymère thermoplastique est obtenu à l'interface, la diffusion intermoléculaire et l'enchevêtrement est nécessaire pour terminer le processus et former une bonne soudure. Un tel phénomène d'autohésion est par exemple décrit dans la publication « Plastics and Composites Welding Handbook », ISBN 1-56990-313-1, page 23. L'état fondu des deux matériaux polymères peut être obtenu notamment par friction, vibration, rotation, irradiation des deux matériaux polymères ou par un élément chauffant les deux matériaux polymères avec ou sans contact.

On comprend donc que le premier matériau polymère et le deuxième matériau polymère sont compatibles chimiquement. On entend par un premier matériau polymère « compatible chimiquement » avec un deuxième matériau polymère le fait que les matériaux polymères comprennent chacun des espèces chimiques pouvant être soudées ensemble, sans nécessiter d'ajout de matière supplémentaire. En d'autres termes, des matériaux polymères compatibles chimiquement sont aptes à se lier intimement entre eux par fusion, et à réaliser en particulier un enchevêtrement moléculaire de chaînes polymériques entre eux. Le soudage des deux matériaux polymères est compris comme la mise en contact des deux matériaux polymères de telle manière que le phénomène d'autohésion se produit à l'endroit du contact. Le phénomène d'autohésion se produit par l'apport de chaleur à l'endroit du contact. Une opération de soudure de deux matériaux sous l'action de la chaleur s'appelle un thermosoudage. Dans la suite, « soudage » est utilisé de manière synonyme avec « thermosoudage ».

Le soudage peut être réalisé par friction, vibration, rotation, irradiation des deux matériaux polymères ou par un élément chauffant les deux matériaux polymères avec ou sans contact. Quelques exemples de techniques de soudage : soudage par plaque chauffante, soudage par vibrations, soudage par ultrasons, soudage par rayonnement laser, soudage par rayonnement infrarouge, soudage par induction électromagnétique, soudage par implant résistif, soudage à gaz chaud par exemple à l'azote, ou encore soudage par rotation. Une combinaison de deux ou plusieurs de ces techniques est aussi possible, par exemple, soudage par rayonnement infrarouge et soudage par vibrations.

On comprend que la « résistance à la déformation » comprend la résistance au fluage et/ou la résistance élastique à la traction également appelée limite d'élasticité et/ou la résistance élastique à la compression. En d'autres termes, le deuxième matériau polymère comporte de préférence une résistance au fluage supérieure à la résistance au fluage du premier matériau et une résistance élastique à la traction supérieure à la résistance élastique à la traction du premier matériau. La résistance élastique à la traction, en d'autres termes, la limite d'élasticité, est la contrainte maximale qu'un matériau peut supporter dans son domaine élastique. Si la contrainte appliquée est supérieure à la limite d'élasticité, le matériau se déforme de manière permanente. La limite d'élasticité d'un matériau peut être mesurée selon la norme ISO 527 : 2012 sur un échantillon de matériau soumis à un allongement en traction, par exemple à une vitesse d'allongement de 50mm/min, à température ambiante (23°C). Dans le cas de matériau hygroscopique tels que les polyamides, le test de traction est réalisé après un conditionnement préalable afin que le taux humidité relative dans l'échantillon soit de 50%. La durée de ce conditionnement est fonction de l'épaisseur de l'échantillon. La forme des échantillons est définie par la norme ISO 527. De préférence, on utilise des échantillons ISO 527 type 1B ou 1A. De préférence, ces échantillons sont préparés par injection. La résistance au fluage définit la déformation sur le long terme d'un matériau soumis à une contrainte. Elle est généralement observée sur plus de 2 jours, de préférence sur au moins 500 heures et à une température de 50°C dans l'air. La résistance au fluage est mesurée selon la norme ISO 899-1 : 2017. La contrainte appliquée durant le test est choisie en fonction de la contrainte maximum estimée dans l'enveloppe interne, en particulier, dans la zone du col en contact avec le joint d'étanchéité. La déformation du matériau en fonction du temps est enregistrée. De préférence, on utilise des échantillons ISO 527 type 1B ou 1A.

Le deuxième matériau polymère peut être le même matériau polymère que le premier matériau polymère, ou bien un matériau polymère différent, par exemple plus résistant, seul, à la déformation que le premier matériau polymère.

Dans un matériau polymère chargé de fibres de renfort, les fibres de renfort et le matériau polymère sont enchevêtrés pour former un matériau monobloc.

Suivant d'autres caractéristiques optionnelles de l'enveloppe interne, prises seules ou en combinaison :
- Les fibres de renfort sont choisies parmi le groupe comprenant les fibres de verre, les fibres de carbone, les fibres polymères, les fibres naturelles, les fibres métalliques, les fibres d'alliages métalliques, les fibres céramiques, les fibres de basalte. Ces fibres permettent d'augmenter la résistance à la déformation du matériau composite.
- Au moins une partie des fibres de renfort forment un renfort textile. Cela permet de simplifier la fabrication de l'enveloppe interne.
- Le premier matériau polymère est thermoplastique, de préférence semi-cristallin, et le second matériau polymère est thermoplastique, de préférence semi-cristallin. Cela permet de simplifier la fabrication de l'enveloppe interne.
- Le premier matériau polymère et le second matériau polymère font partie de la même famille de polymères, de préférence de la famille de polymères choisie parmi le groupe comprenant la famille des polyamides (PA), la famille des polyphthalamides (PPA), la famille des polyoléfines, la famille des polycétones (PK), la famille des polyacétals. De préférence, on utilise les copolymères et les homopolymères des familles précitées. Ainsi, en particulier du fait de la compatibilité chimique entre le premier matériau polymère et le deuxième matériau polymère, l'enchevêtrement moléculaire de chaînes polymériques du premier matériau polymère et du deuxième matériau polymère est plus élevé.
- Le deuxième matériau polymère est identique au premier matériau polymère, par exemple, du PA6. Dans ce cas, la compatibilité chimique est optimale, de même que l'enchevêtrement moléculaire des chaînes polymériques.
- Le corps creux comporte une pluralité de couches, au moins une couche étant réalisée dans le premier matériau polymère. Ainsi, l'intégrité de l'enveloppe interne est préservée, tout en permettant l'utilisation d'autres couches pour le corps creux, permettant par exemple d'augmenter la résistance de l'enveloppe interne aux remplissages et vidages successifs, et/ou aux agressions chimiques du fluide sous pression contenu au sein de l'enveloppe interne. De préférence, l'une des autres couches est constituée d'EVOH (copolymère à base d'éthylène et d'alcool de vinyle), cette couche est avantageusement placée entre deux couches d'adhésif. De préférence, les couches d'adhésif sont à base de polyéthylène basse densité greffé par des fonctions de type anhydride maléique.

L'invention a également pour objet un procédé de fabrication d'une enveloppe interne du type susmentionné, lequel comporte les étapes suivantes :
- disposer un corps creux doté d'une ouverture,
- disposer un col configuré pour délimiter l'ouverture du corps creux,
- assemblage par soudage du col et du corps creux.

L'invention a également pour objet, un procédé de fabrication d'une enveloppe interne du type susmentionné, lequel comporte les étapes suivantes :
- disposer un col dans un moule, le col étant configuré pour délimiter l'ouverture d'un corps creux, le col étant réalisé dans un matériau composite composé d'un deuxième matériau polymère chargé de fibres de renfort,
- moulage d'un corps creux par injection ou par rotomoulage dans le moule d'un premier matériau polymère, dans lequel :
   au cours de l'injection ou du rotomoulage, le premier matériau polymère entoure une partie du matériau composite du col et le deuxième matériau polymère fond au moins partiellement au contact du premier matériau polymère, de telle manière qu'après l'injection, le col est surmoulé par le premier matériau polymère et le col est relié au corps creux par enchevêtrement moléculaire de chaînes polymériques du premier matériau polymère et de chaînes polymériques du deuxième matériau polymère.

Préférentiellement le col est préchauffé dans le moule ou avant son positionnement dans le moule afin de favoriser l'enchevêtrement moléculaire de chaînes polymériques.

L'invention a encore pour objet un procédé de fabrication d'une enveloppe interne du type susmentionné, lequel comporte les étapes suivantes :
- moulage d'un corps creux dans un moule par injection d'un premier matériau polymère via un premier orifice d'injection,
- simultanément, co-moulage dans le moule d'un col délimitant une ouverture du corps creux par injection d'un matériau composite composé d'un deuxième matériau polymère chargé de fibres de renfort via un deuxième orifice d'injection, de telle manière qu'après moulage, le col est relié au corps creux par enchevêtrement moléculaire de chaînes polymériques du premier matériau polymère et de chaînes polymériques du deuxième matériau polymère.

L'invention a en outre pour objet un procédé de fabrication d'une enveloppe interne du type susmentionné, lequel comporte les étapes suivantes :
- disposition de fibres de renfort dans un moule, de préférence traitées en surface avec un agent de compatibilisation comme par exemple un silane, dans une zone configurée pour devenir un col configuré pour délimiter l'ouverture d'un corps creux,
- moulage d'un corps creux et d'un col par injection ou par rotomoulage ou par extrusion soufflage, préférentiellement par extrusion soufflage, dans le moule d'un premier matériau polymère.

L'invention a également pour objet un procédé de fabrication d'une enveloppe interne du type susmentionné, lequel comporte les étapes suivantes :
- disposer un col dans un moule, le col étant configuré pour délimiter l'ouverture d'un corps creux, le col étant réalisé dans un matériau composite composé d'un deuxième matériau polymère chargé de fibres de renfort,
- moulage d'un corps creux par extrusion soufflage dans le moule d'un premier matériau polymère, dans lequel :
   au cours de l'extrusion soufflage, le premier matériau polymère entoure une partie du matériau composite du col et le deuxième matériau polymère fond au moins partiellement au contact du premier matériau polymère, de telle manière qu'après l'extrusion soufflage, le col est surmoulé par le premier matériau polymère et le col est relié au corps creux par enchevêtrement moléculaire de chaînes polymériques du premier matériau polymère et de chaînes polymériques du deuxième matériau polymère.

Préférentiellement le col est préchauffé dans le moule ou avant son positionnement dans le moule afin de favoriser l'enchevêtrement moléculaire de chaînes polymériques.

L'invention a également pour objet un procédé de fabrication d'une enveloppe interne du type susmentionné, lequel comporte les étapes suivantes :
- disposer un col dans un moule, le col étant configuré pour délimiter l'ouverture d'un corps creux, le col étant réalisé dans un matériau composite composé d'un deuxième matériau polymère chargé de fibres de renfort,
- moulage d'un corps creux par roto-moulage d'un premier matériau polymère à l'aide d'un moule chauffé à une température supérieure à la température de fusion du premier matériau polymère, dans lequel :
   au cours du roto-moulage, le premier matériau polymère entoure une partie du matériau composite du col et fond au moins partiellement par chauffage via le moule, le deuxième matériau polymère fond au moins partiellement au contact du premier matériau polymère et/ou au contact du moule, de telle manière qu'après le roto-moulage, le col est surmoulé par le premier matériau polymère et le col est relié au corps creux par enchevêtrement moléculaire de chaînes polymériques du premier matériau polymère et de chaînes polymériques du deuxième matériau polymère.

Préférentiellement le col est préchauffé dans le moule ou avant son positionnement dans le moule afin de favoriser l'enchevêtrement moléculaire de chaînes polymériques.

L'invention a enfin pour objet un réservoir de stockage pour fluide sous pression pour véhicule automobile, de préférence pour hydrogène, comprenant :
- une enveloppe interne du type susmentionné,
- une embase rapportée sur le col de l'enveloppe interne, à l'extérieur du col,
- un joint d'étanchéité disposé entre le col et l'embase, de préférence radialement,
- une enveloppe externe de renfort, rapportée autour de l'enveloppe interne et de l'embase.

### Brève description des figures

L'invention sera mieux comprise à la lecture de la description qui va suivre donnée uniquement à titre d'exemple et faite en se référant aux dessins annexés dans lesquels :
- la figure 1 est une vue en coupe longitudinale schématique partielle d'un réservoir comportant une enveloppe interne selon un premier mode de réalisation de l'invention ;
- la figure 2 est une vue en coupe schématique partielle d'un moule permettant la fabrication selon un premier mode de réalisation d'une enveloppe interne similaire à celle de la figure 1 ;
- la figure 3 est une vue en coupe schématique partielle illustrant la fabrication selon un deuxième mode de réalisation d'une enveloppe interne similaire à celle de la figure 1 ;
- la figure 4 est une vue en coupe schématique partielle d'un moule permettant la fabrication selon un troisième mode de réalisation d'une enveloppe interne similaire à celle de la figure 1 ;
- la figure 5 est une vue en coupe schématique partielle d'un moule permettant la fabrication selon un quatrième mode de réalisation d'une enveloppe interne similaire à celle de la figure 1 ;
- la figure 6 est une vue en coupe longitudinale schématique partielle d'un réservoir comportant une enveloppe interne selon un deuxième mode de réalisation de l'invention.

### Description détaillée

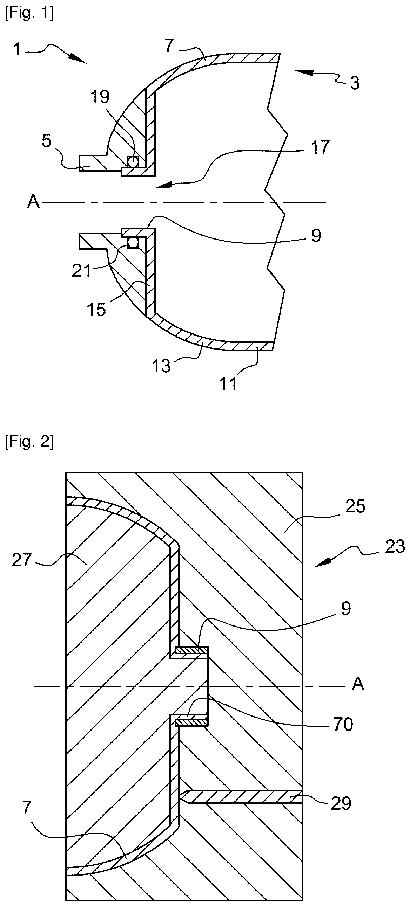

Comme illustré sur la figure 1, le réservoir 1 de stockage de fluide sous pression, par exemple pour véhicule automobile, comporte une enveloppe interne 3 et une pièce d'interface formant embase 5. L'embase 5 du réservoir sert, par exemple, à recevoir des moyens de raccordement du réservoir pour le remplir ou le vider. De préférence, l'embase 5 est métallique, par exemple en acier inoxydable. Le réservoir 1 peut également comporter une enveloppe externe de renfort, non représentée, rapportée autour de l'enveloppe interne 3 et de l'embase 5, notamment pour supporter la pression du fluide. Le réservoir 1 est de préférence prévu pour le stockage d'hydrogène sous pression, par exemple à une pression d'au moins 350 bar à l'état rempli, de préférence d'au moins 700 bar à l'état rempli. Une pression de 700 bar est typique des applications pour véhicules légers, tandis qu'une pression de 350 bar est typique des applications pour poids lourds et autobus.

L'enveloppe interne 3 comporte un corps creux 7 et un col 9. L'embase 5 est rapportée sur le col 9 de l'enveloppe interne 3, à l'extérieur du col 9.

Le corps creux 7 est par exemple composé d'un cylindre 11 (seule une portion du cylindre 11 est illustrée sur la figure 1), dont au moins une extrémité présente une portion hémisphérique 13. L'extrémité de la portion hémisphérique 13 opposée au cylindre 11 se présente ici sous la forme d'un disque 15, par exemple doté d'une ouverture 17. L'ouverture 17 est dans cet exemple orientée sensiblement coaxialement à l'axe A du cylindre et de la portion hémisphérique 13 correspondante.

Dans un exemple particulier, les deux extrémités du cylindre 11 présentent une portion hémisphérique 13, un disque 15 et une ouverture 17.

Le col 9 est disposé sur le corps creux 7 et délimite l'ouverture 17 du corps creux 7. Le col 9 est configuré pour recevoir l'embase 5. L'embase 5 est rapportée sur le col 9 de façon étanche grâce à un joint d'étanchéité 19 disposé entre le col 9 et l'embase 5. Dans le mode de réalisation illustré sur la figure 1, le col 9 est orienté vers l'extérieur de l'enveloppe interne 3 et reçoit l'embase 5 sur son pourtour externe.

Dans l'exemple illustré sur la figure 1, l'embase 5 est rapportée sur le col 9 par vissage. Ainsi, au moins une partie du pourtour externe du col 9 est prévue avec un filetage sur lequel vient se visser l'embase 9 via un filetage correspondant.

Le joint d'étanchéité 19 est disposé entre l'embase 5 et le col 9, de préférence radialement. Dans l'exemple illustré sur la figure 1, le joint d'étanchéité 19 est annulaire et disposé radialement dans un logement annulaire 21 de l'embase 5.

Le corps creux 7 comporte au moins une couche réalisée dans un premier matériau polymère.

Par exemple, le corps creux 7 comporte une couche unique.

Alternativement, le corps creux 7 comporte une pluralité de couches, au moins une couche étant réalisée dans le premier matériau polymère. Par exemple, une couche formant barrière au fluide sous pression peut être utilisée, en particulier en EVOH. Le rôle de la couche formant barrière est d'empêcher la diffusion du fluide sous pression à travers l'épaisseur du corps creux 7, hors de l'enveloppe interne 3. Cette couche formant barrière est par exemple placée entre deux couches d'adhésif. Ces couches d'adhésif assurent l'adhésion entre la couche formant barrière et des couches de matériau polymère, en particulier en polyéthylène. Les couches internes et externes du corps creux 7 sont par exemples réalisées en polymère, comme du polyéthylène, en particulier du polyéthylène à haute densité. Le corps creux 7 peut ainsi être réalisé par extrusion, en particulier co-extrusion, par moulage, par soufflage ou « blow-molding », plus particulièrement par extrusion soufflage, par extrusion par film soufflé ou « film blow extrusion », par laminage, par thermoformage, par roto-moulage, par injection ou bien par injection-soufflage.

Le col 9 est réalisé dans un matériau composite composé d'un deuxième matériau polymère chargé de fibres de renfort. Ce matériau composite présente une résistance à la déformation supérieure à la résistance à la déformation du premier matériau polymère.

Dans le col 9, les fibres de renfort sont par exemple dispersées au sein du deuxième matériau polymère. La déformation locale est ainsi plus faible.

Ainsi, le col 9 est relié au corps creux 7 par enchevêtrement moléculaire de chaînes polymériques du premier matériau polymère et de chaînes polymériques du deuxième matériau polymère.

Le premier matériau polymère est par exemple thermoplastique, en particulier semi-cristallin.

Le deuxième matériau polymère est par exemple thermoplastique, en particulier semi-cristallin.

Par exemple, le premier matériau polymère et le second matériau polymère font partie de la même famille de polymères, de préférence de la famille de polymères choisie parmi le groupe comprenant la famille des polyamides (PA), la famille des polyphthalamides (PPA), la famille des polyoléfines, la famille des polycétones (PK), la famille des polyacétals.

Pour certains matériaux polymères, par exemple le polyéthylène (PE), l'indice de distribution de ramification de chaînes courtes influe sur la résistance à la déformation, en particulier le fluage. Ainsi, la résistance à la déformation, en particulier au fluage, est améliorée avec un indice plus élevé de distribution de ramification de chaînes courtes.

Dans un exemple particulier, le premier matériau polymère est identique au deuxième matériau polymère. Dans ce cas, le corps creux 7 est alors réalisé dans un premier matériau polymère, non chargé de fibres de renfort, alors que le col 9 est réalisé dans un matériau composite composé du même matériau polymère chargé de fibres de renfort.

Les fibres de renforts 22 sont des fibres minérales ou organiques, naturelles ou synthétiques, de préférence choisies parmi le groupe comprenant les fibres de verre, les fibres de carbone, les fibres polymères, les fibres naturelles, les fibres métalliques, les fibres d'alliages métalliques, les fibres céramiques, les fibres de basalte. Le groupe des fibres synthétiques comprend notamment l'aramide et le polyester. Le groupe des fibres naturelles comprend notamment le chanvre et le sisal. Les fibres de renfort peuvent être à base de verre, de carbone, de polymère. Dans le cas d'un polymère, il peut s'agir par exemple d'un polyamide aromatique comme un aramide. Les fibres de verre sont de préférence des fibres de verre E, de verre S ou d'un autre type de verre. Les fibres de renfort sont de préférence compatibles avec un matériau thermoplastique, généralement compatibles avec les polyoléfines, en particulier avec le HDPE pour polyéthylène à haute densité. Par exemple, les fibres de renfort sont traitées en surface avec un agent de compatibilisation comme par exemple un silane ou un composé comprenant des groupes anhydrides maléiques.

Le diamètre des fibres de renfort est par exemple compris entre 0.1 µm et 1 mm, de préférence entre 5 µm et 50 µm, plus préférentiellement entre 3 µm et 30 µm.

Les fibres de renfort peuvent être courtes, longues ou continues. Les fibres courtes sont généralement d'une longueur comprise entre 1 µm et 10 µm. Les fibres longues ont généralement une longueur comprise entre 1 mm et 11 mm. Les fibres continues ont une longueur d'au moins plusieurs centimètres.

Dans le cas de fibres de renfort courtes ou longues, la teneur de fibres de renfort dans le matériau composite est généralement comprise entre 10% et 60% en poids. Au-dessous de 10% en poids, l'amélioration des caractéristiques mécaniques comme la résistance à la déformation n'est pas significative. Au-dessus de 60% en poids, le matériau est difficile à utiliser pour la fabrication, en particulier pour un moulage par injection.

Un matériau composite composé de polyéthylène de masse molaire très élevée, également connu sous l'acronyme UHMPE, et de fibres de renfort peut être utilisé. Par exemple, on trouve le matériau composite RTP 799 X 138861 D de la société RTP, dans lequel les fibres de renfort sont des fibres de verre. Ce matériau composite est en particulier compatible avec le moulage par injection malgré sa masse molaire très élevée.

Dans le cas de fibres longues, des fibres de verre ou de carbone peuvent être utilisées.

Dans le cas de fibres de renfort continues, la teneur de fibres de renfort dans le matériau composite est généralement comprise entre 30 et 70% en volume. Les fibres continues sont par exemple pré-imprégnées par un matériau polymère et sont alors appelées « prepreg ». Elles peuvent être tissées, non tissées c'est-à-dire dispersées aléatoirement, ou bien unidirectionnelles.

Dans le cas de fibres continues tissées, on trouve par exemple le matériau Dynalite (marque déposée) 111RG600(3)/47% de la société Lanxess. Ce « prepreg » contient 47% de fibres de verre continues en volume, imprégnées avec du polyéthylène à haute densité.

Des fibres continues unidirectionnelles se présentent par exemple sous la forme d'un ruban unidirectionnel, par exemple Celstran (marque déposée) CFR-TP HDPE-GF70-01 de la société Celanese. Dans ce cas, la teneur en fibres est par exemple de 70% en poids ou de 45% en volume.

Les exemples suivants sont présentés pour des enveloppes internes réalisées par moulage par injection :

### Exemple 1 :

Premier polymère : PA6. La résistance élastique à la traction à 23°C est d'environ 45MPa à 48MPa. Par exemple, le polymère commercialisé sous le nom UBE NYLON (marque déposée) 1218IU de la société UBE INDUSTRIES.

Matériau composite : PA6 chargé de fibres de verre courtes. Par exemple :
- avec 10% en poids de fibres de verre, matériau composite ACCUTECH (marque déposée) NY0730G10L1 de la société A. Schulman, la résistance élastique à la traction est d'environ 102 MPa ;
- avec 20% en poids de fibres de verre, matériau composite ACCUTECH (marque déposée) NY0730G20L de la société A. Schulman, la résistance élastique à la traction est d'environ 120 MPa ;
- avec 30% en poids de fibres de verre, matériau composite ACCUTECH (marque déposée) NY0730G30L de la société A. Schulman, la résistance élastique à la traction est d'environ 144 MPa.

### Exemple 2 :

Premier polymère : HDPE ou polyéthylène haute densité. La résistance élastique à la traction est d'environ 22MPa. Par exemple, le polymère commercialisé sous le nom Lupolen (marque déposée) GX5038 de la société Lyondellbasell.

Matériau composite : HDPE ou polyéthylène haute densité, chargé de fibres de verre courtes. Par exemple :
- avec 10% en poids de fibres de verre, matériau composite THERMOFIL (marque déposée) 10FOV2 X066 de la société Sumika, la résistance élastique à la traction est d'environ 30 MPa.

L'orientation des fibres de renfort dans le matériau composite peut être adaptée afin d'optimiser les caractéristiques mécaniques, comme la résistance à la déformation, dans la direction de la contrainte appliquée par le joint d'étanchéité 19.

Par exemple, les fibres de renfort sont tissées. Les fibres de renfort forment alors un renfort textile 22.

Les éléments communs à tous les modes de réalisation de l'invention sont référencés avec les mêmes numéros que ceux du mode de réalisation illustré sur la figure 1.

Plusieurs exemples de procédés de fabrication d'une enveloppe interne 3 vont à présent être décrits.

Dans l'exemple de procédé de fabrication d'une enveloppe interne 3 illustré sur la figure 2, on dispose d'un moule 23, lequel est par exemple composé d'une coquille fixe 25 et d'une coquille mobile 27.

La coquille fixe 25 comporte une empreinte délimitant le corps creux 7 et le col 9, ainsi qu'au moins un premier orifice d'injection 29. L'orifice d'injection 29 est par exemple disposé axialement débouchant sur l'empreinte, par exemple au niveau de la zone délimitant le corps creux 7.

Selon le procédé illustré sur la figure 2, on dispose un col 9 dans le moule 23, en particulier sur la coquille fixe 25. Le col 9 est ainsi préalablement réalisé dans un matériau composite composé d'un matériau polymère, appelé deuxième matériau polymère, et de fibres de renfort.

Un matériau polymère, appelé premier matériau polymère, est ensuite injecté à travers l'orifice d'injection 29 pour former le corps creux 7, et réaliser la liaison entre le corps creux 7 et le col 9 par enchevêtrement moléculaire de chaînes polymériques du premier matériau polymère et de chaînes polymériques du deuxième matériau polymère.

Au cours de l'injection, le premier matériau polymère - en fusion - entoure le pourtour interne du col 9 (voir figure 2, référence 70) et le deuxième polymère fond au moins partiellement au contact du premier matériau polymère. Pour cela, le premier matériau polymère est injecté dans le moule 23 à une température d'au moins 10°C supérieure à la température de fusion du deuxième matériau polymère. Après injection, le col 9 est alors surmoulé par le premier matériau polymère et le col 9 est relié au corps creux 7 par enchevêtrement moléculaire de chaînes polymériques du premier matériau polymère et de chaînes polymériques du deuxième matériau polymère. Une enveloppe interne 3 est alors formée, comportant un corps creux 7 comportant une couche réalisée dans un premier matériau polymère et un col 9 disposé sur le corps creux 7 et délimitant une ouverture 17 du corps creux 7.

Dans cet exemple, le deuxième matériau polymère peut être identique au premier matériau polymère, ou bien peut être différent du premier matériau polymère.

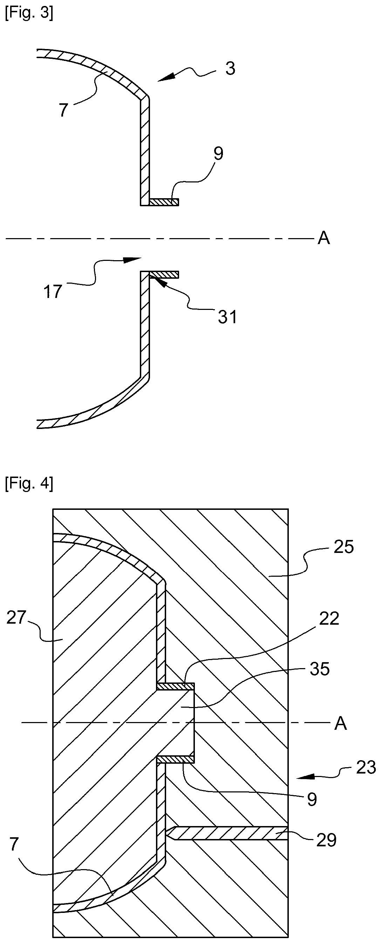

Dans un autre exemple de procédé de fabrication illustré sur la figure 3, on dispose d'un corps creux 7 préalablement fabriqué, lequel comporte une ouverture 17. Le corps creux 7 est réalisé dans un premier matériau polymère. On dispose également d'un col 9 préalablement fabriqué. Le col 9 est réalisé dans un matériau composite composé d'un deuxième matériau polymère chargé en fibres de renfort.

Dans l'exemple de procédé de fabrication d'une enveloppe interne 3 illustré sur la figure 3, on assemble le col 9 et le corps creux 7 par soudage. Par exemple, le soudage est réalisé au niveau d'une zone de contact annulaire 31 entre le col 9 et le corps creux 7. Ainsi, après soudage, le col 9 est relié au corps creux 7 par enchevêtrement moléculaire de chaînes polymériques du premier matériau polymère et de chaînes polymériques du deuxième matériau polymère. Une enveloppe interne 3 est alors formée, comportant un corps creux 7 comportant une couche réalisée dans un premier matériau polymère et un col 9 disposé sur le corps creux 7 et délimitant une ouverture 17 du corps creux 7.

Si le deuxième matériau polymère est un polyphthalamide, le soudage au gaz chaud peut, par exemple, être utilisé. Le gaz est de préférence un gaz inerte tel que l'azote, ceci permet d'éviter l'oxydation du matériau polymère.

Dans cet exemple, le deuxième matériau polymère peut être identique au premier matériau polymère, ou bien peut être différent du premier matériau polymère.

Dans un autre exemple de procédé de fabrication illustré sur la figure 4, celui-ci se distingue de l'exemple illustré sur la figure 2 en ce qu'au lieu de disposer un col 9 dans le moule 23, on dispose des fibres de renfort continues dans le moule 23, dans une zone configurée pour devenir un col 9 configuré pour délimiter l'ouverture 17 d'un corps creux 7. Ainsi, les fibres de renfort sont par exemple disposées autour d'un tourillon 35 de la coquille mobile 27. Dans l'exemple illustré sur la figure 4, ces fibres de renfort sont tissées sous la forme d'un renfort textile 22.

Un premier matériau polymère est ensuite injecté dans le moule 23 à travers l'orifice d'injection 29 pour former par moulage le corps creux 7 et le col 9. Ainsi, dans ce cas, le matériau polymère composant le corps creux 7 est identique au matériau polymère du col 9. Dans ce cas, le corps creux 7 est alors réalisé dans un premier matériau polymère, non chargé de fibres de renfort, alors que le col 9 est réalisé dans un matériau composite composé du même matériau polymère chargé des fibres de renfort, par exemple tissées sous la forme d'un renfort textile 22. En outre, la liaison entre le corps creux 7 et le col 9 est réalisée par enchevêtrement moléculaire de chaînes polymériques du matériau polymère. Une enveloppe interne 3 est alors formée, comportant un corps creux 7 comportant une couche réalisée dans un premier matériau polymère et un col 9 disposé sur le corps creux 7 et délimitant une ouverture 17 du corps creux 7.

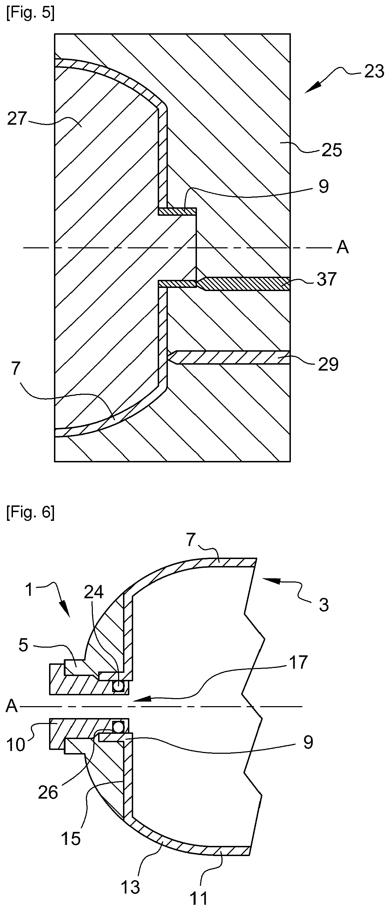

Dans un dernier exemple de procédé de fabrication illustré sur la figure 5, on se distingue de l'exemple illustré sur la figure 2 en ce qu'au lieu de disposer un col 9 dans le moule 23, le moule 23 comporte au moins un deuxième orifice d'injection 37 débouchant dans une zone configurée pour devenir un col 9 configuré pour délimiter l'ouverture 17 d'un corps creux 7.

Au cours du procédé, un premier matériau polymère est injecté dans le moule 23 à travers l'orifice d'injection 29 pour former le corps creux 7, et simultanément, un matériau composite composé d'un deuxième matériau polymère chargé de fibres de renfort est injecté dans le moule 23 à travers l'orifice d'injection 37 pour former le col 9. Dans la zone de liaison entre le corps creux 7 et le col 9, le moule 23 présente un élément mobile (non représenté) qui délimite une cavité d'injection pour le deuxième matériau polymère. Dès que les premier et deuxième matériaux polymères sont injectés, l'élément mobile est retiré pour laisser le deuxième matériau polymère entrer en contact avec le premier matériau polymère. Ainsi, la liaison entre le corps creux 7 et le col 9 se produit en un lieu prédéfini. Alternativement, le deuxième matériau polymère peut être injecté quelques secondes avant ou après l'injection du premier matériau polymère, par exemple une seconde après. Dans cet exemple, le deuxième matériau polymère peut être identique au premier matériau polymère, ou bien peut être différent du premier matériau polymère.

Ainsi, après injection, le col 9 est relié au corps creux 7 par enchevêtrement moléculaire de chaînes polymériques du premier matériau polymère et de chaînes polymériques du deuxième matériau polymère. Une enveloppe interne 3 est alors formée, comportant un corps creux 7 comportant une couche réalisée dans un premier matériau polymère et un col 9 disposé sur le corps creux 7 et délimitant une ouverture 17 du corps creux 7.

La figure 6 illustre un réservoir comportant une enveloppe interne selon un deuxième mode de réalisation de l'invention. Dans cette variante de réalisation, la pièce d'interface forme une vanne 10 et le col 9 est configuré pour recevoir la vanne 10. La vanne 10 sert, par exemple, de moyen de raccordement du réservoir pour le remplir ou le vider. La vanne 10 est rapportée sur le col 9 de l'enveloppe interne 3, à l'intérieur du col 9. La vanne 10 est rapportée sur le col 9 de façon étanche grâce à un joint d'étanchéité 24 disposé entre le col 9 et la vanne 10. Dans ce mode de réalisation, le col 9 est orienté vers l'extérieur de l'enveloppe interne 3 et reçoit la vanne 10 sur son pourtour interne.

Dans l'exemple illustré sur la figure 6, la vanne 10 est rapportée sur le col 9 par vissage de la vanne 10 sur l'embase 5. Ainsi, au moins une partie du pourtour interne du de l'embase 5 est prévue avec un filetage sur lequel vient se visser la vanne 10 via un filetage correspondant.

Le joint d'étanchéité 24 est disposé entre la vanne 10 et le col 9, de préférence radialement. Dans l'exemple illustré sur la figure 6, le joint d'étanchéité 24 est annulaire et disposé radialement dans un logement annulaire 26 de la vanne 10.

Dans une variante de réalisation (non représentée), la pièce d'interface forme un bouchon étanche. Le bouchon étanche sert, par exemple, de moyen de fermeture d'une extrémité du cylindre 11.

L'invention n'est pas limitée aux modes de réalisation présentés et d'autres modes de réalisation apparaîtront clairement à l'homme du métier.

Bien que l'invention illustrée sur la figure 1 montre un col 9 orienté vers l'extérieur de l'enveloppe interne 3 et recevant l'embase 5 sur son pourtour externe, l'homme du métier comprendra aisément qu'un tel col 9 pourrait être orienté vers l'intérieur de l'enveloppe interne 3 et recevoir l'embase 5 sur son pourtour interne (non représenté).Un autre procédé de fabrication d'une enveloppe interne 3, similaire au procédé de fabrication illustré sur la figure 5, se distingue de celui-ci en ce que le deuxième matériau polymère est polymérisé in situ dans le moule 23 dans la zone du col 9. Par exemple, la polymérisation in situ de polyamide à partir de caprolactame pourrait être réalisée. Ce procédé est couramment désigné sous le nom « moulage par transfert de résine » ou sous le sigle anglais RTM pour « resin transfer molding ». Le caprolactame est le monomère constitutif du PA6, le caprolactame présente l'avantage, avant polymérisation, d'être moins visqueuse que le PA6, ceci permet d'imprégner un renfort textile avec moins de pression.

Pour cela, un mélange de plusieurs composés est réalisé préalablement à son injection via le deuxième orifice d'injection 37. Ces composés sont de préférence préalablement fondus à une température entre 90°C et 110°C. La réaction de polymérisation dure typiquement de 2 à 3 minutes.

Dans un premier exemple de réalisation, le premier matériau est composé de caprolactame, d'un activateur, d'un additif et de fibres de renfort. Dans un deuxième exemple de réalisation, le premier matériau est composé de caprolactame, d'un activateur, d'un additif. Dans ce deuxième exemple de réalisation, on dispose des fibres de renfort dans le moule 23, dans une zone configurée pour devenir un col 9 configuré pour délimiter l'ouverture 17 d'un corps creux 7. Ainsi, les fibres de renfort sont par exemple disposées autour d'un tourillon 35 de la coquille mobile 27. Ces fibres de renfort sont par exemple tissées sous la forme d'un renfort textile 22. Dans ces deux exemples de réalisation, le deuxième matériau est composé de caprolactame et d'un catalyseur. La température du moule est de préférence 150°C afin d'optimiser la réaction de polymérisation tout en permettant le démoulage facile de l'enveloppe interne après polymérisation.

Ces deux matériaux peuvent être stockés séparément, et mélangés en amont de l'orifice d'injection 37 pour former le mélange précité.

Au cours du procédé, un premier matériau polymère est injecté dans le moule 23 à travers l'orifice d'injection 29 pour former le corps creux 7, et simultanément, le mélange précité est injecté via l'orifice d'injection 37 dans la zone configurée pour devenir un col 9 configuré pour délimiter l'ouverture 17 d'un corps creux 7. Après injection, le mélange se polymérise in situ et forme ainsi le col 9. Alternativement, le mélange précité peut être injecté avant d'injecter le premier matériau polymère, par exemple une minute avant, pour que la réaction de polymérisation du deuxième matériau commence avant d'entrer en contact avec le premier matériau polymère.

## Revendications

1. Enveloppe interne (3) pour réservoir (1) de stockage de fluide sous pression pour véhicule automobile, l'enveloppe interne (3) comportant :
- un corps creux (7) comportant au moins une couche réalisée dans un premier matériau polymère,
- un col (9) disposé sur le corps creux (7) et délimitant une ouverture (17) du corps creux (7), le col (9) étant configuré pour recevoir une pièce d'interface (5, 10) rapportée sur le col (9) de façon étanche grâce à un joint d'étanchéité (19) disposé entre le col (9) et la pièce d'interface (5, 10), le col (9) étant réalisé dans un matériau composite comprenant un deuxième matériau polymère,
le col (9) étant relié au corps creux (7) par enchevêtrement moléculaire de chaînes polymériques du premier matériau polymère et de chaînes polymériques du deuxième matériau polymère,
l'enveloppe interne (3) étant **caractérisée en ce que**
le matériau composite est composé du deuxième matériau polymère chargé de fibres de renfort, et **en ce que**
le matériau composite présente une résistance à la déformation supérieure à la résistance à la déformation du premier matériau polymère.

2. Enveloppe interne (3) selon la revendication précédente, dans laquelle les fibres de renfort sont choisies parmi le groupe comprenant les fibres de verre, les fibres de carbone, les fibres polymères, les fibres naturelles, les fibres métalliques, les fibres d'alliages métalliques, les fibres céramiques, les fibres de basalte.

3. Enveloppe interne (3) selon l'une quelconque des revendications précédentes, dans laquelle au moins une partie des fibres de renfort forment un renfort textile (22).

4. Enveloppe interne (3) selon l'une quelconque des revendications précédentes, dans laquelle :
- le premier matériau polymère est thermoplastique, en particulier semi-cristallin, et
- le second matériau polymère est thermoplastique, en particulier semi-cristallin.

5. Enveloppe interne (3) selon l'une quelconque des revendications précédentes, dans laquelle le premier matériau polymère et le second matériau polymère font partie de la même famille de polymères, de préférence de la famille de polymères choisie parmi le groupe comprenant la famille des polyamides (PA), la famille des polyphthalamides (PPA), la famille des polyoléfines, la famille des polycétones (PK), la famille des polyacétals.

6. Enveloppe interne (3) selon l'une quelconque des revendications précédentes, dans laquelle le deuxième matériau polymère est identique au premier matériau polymère.

7. Enveloppe interne (3) selon l'une quelconque des revendications précédentes, dans laquelle le corps creux (7) comporte une pluralité de couches, au moins une couche étant réalisée dans le premier matériau polymère.

8. Procédé de fabrication d'une enveloppe interne (3) selon l'une quelconque des revendications précédentes, lequel comporte les étapes suivantes :
- disposer un corps creux (7) doté d'une ouverture (17),
- disposer un col (9) configuré pour délimiter l'ouverture (17) du corps creux (7),
- assemblage par soudage du col (9) et du corps creux (7).

9. Procédé de fabrication d'une enveloppe interne (3) selon l'une quelconque des revendications 1 à 7, lequel comporte les étapes suivantes :
- disposer un col (9) dans un moule (23), le col (9) étant configuré pour délimiter l'ouverture (17) d'un corps creux (7), le col (9) étant réalisé dans un matériau composite composé d'un deuxième matériau polymère chargé de fibres de renfort,
- moulage d'un corps creux (7) par injection ou par rotomoulage dans le moule (23) d'un premier matériau polymère, dans lequel :
au cours de l'injection ou du rotomoulage, le premier matériau polymère entoure une partie du matériau composite du col (9) et le deuxième matériau polymère fond au moins partiellement au contact du premier matériau polymère, de telle manière qu'après l'injection, le col (9) est surmoulé par le premier matériau polymère et le col (9) est relié au corps creux (7) par enchevêtrement moléculaire de chaînes polymériques du premier matériau polymère et de chaînes polymériques du deuxième matériau polymère.

10. Procédé de fabrication d'une enveloppe interne (3) selon l'une quelconque des revendications 1 à 7, lequel comporte les étapes suivantes :
- moulage d'un corps creux (7) dans un moule (23) par injection d'un premier matériau polymère via un premier orifice d'injection (29),
- simultanément, co-moulage dans le moule d'un col (9) délimitant une ouverture (17) du corps creux (7) par injection d'un matériau composite composé d'un deuxième matériau polymère chargé de fibres de renfort via un deuxième orifice d'injection (37), de telle manière qu'après moulage, le col (9) est relié au corps creux (7) par enchevêtrement moléculaire de chaînes polymériques du premier matériau polymère et de chaînes polymériques du deuxième matériau polymère.

11. Procédé de fabrication d'une enveloppe interne (3) selon l'une quelconque des revendications 1 à 7, lequel comporte les étapes suivantes :
- disposition de fibres de renfort dans un moule (23), de préférence traitées en surface avec un agent de compatibilisation comme par exemple un silane, dans une zone configurée pour devenir un col (9) configuré pour délimiter l'ouverture (17) d'un corps creux (7),
- moulage d'un corps creux (7) et d'un col (9) par injection ou par rotomoulage ou par extrusion soufflage, préférentiellement par extrusion soufflage, dans le moule (23) d'un premier matériau polymère.

12. Procédé de fabrication d'une enveloppe interne (3) selon l'une quelconque des revendications 1 à 7, lequel comporte les étapes suivantes :
- disposer un col (9) dans un moule (23), le col (9) étant configuré pour délimiter l'ouverture (17) d'un corps creux (7), le col (9) étant réalisé dans un matériau composite composé d'un deuxième matériau polymère chargé de fibres de renfort,
- moulage d'un corps creux (7) par extrusion soufflage dans le moule (23) d'un premier matériau polymère, dans lequel :
au cours de l'extrusion soufflage, le premier matériau polymère entoure une partie du matériau composite du col (9) et le deuxième matériau polymère fond au moins partiellement au contact du premier matériau polymère, de telle manière qu'après l'extrusion soufflage, le col (9) est surmoulé par le premier matériau polymère et le col (9) est relié au corps creux (7) par enchevêtrement moléculaire de chaînes polymériques du premier matériau polymère et de chaînes polymériques du deuxième matériau polymère.

13. Procédé de fabrication d'une enveloppe interne (3) selon l'une quelconque des revendications 1 à 7, lequel comporte les étapes suivantes :
- disposer un col (9) dans un moule (23), le col (9) étant configuré pour délimiter l'ouverture (17) d'un corps creux (7), le col (9) étant réalisé dans un matériau composite composé d'un deuxième matériau polymère chargé de fibres de renfort,
- moulage d'un corps creux (7) par roto-moulage d'un premier matériau polymère à l'aide d'un moule chauffé à une température supérieure à la température de fusion du premier matériau polymère, dans lequel :
au cours du roto-moulage, le premier matériau polymère entoure une partie du matériau composite du col (9) et fond au moins partiellement par chauffage via le moule, le deuxième matériau polymère fond au moins partiellement au contact du premier matériau polymère et/ou au contact du moule, de telle manière qu'après le roto-moulage, le col (9) est surmoulé par le premier matériau polymère et le col (9) est relié au corps creux (7) par enchevêtrement moléculaire de chaînes polymériques du premier matériau polymère et de chaînes polymériques du deuxième matériau polymère.

14. Réservoir (1) de stockage pour fluide sous pression pour véhicule automobile, de préférence pour hydrogène, comprenant :
- une enveloppe interne (3) selon l'une quelconque des revendications 1 à 7,
- une embase (5) rapportée sur le col (9) de l'enveloppe interne (3), à l'extérieur du col (9),
- un joint d'étanchéité (19) disposé entre le col (9) et l'embase (5), de préférence radialement,
- une enveloppe externe de renfort, rapportée autour de l'enveloppe interne (3) et de l'embase (5).

## Patentansprüche

1. Innengehäuse (3) für einen Druckflüssigkeitsvorratstank (1) für Kraftfahrzeuge, wobei das Innengehäuse (3) aufweist:
- einen Hohlkörper (7) mit wenigstens einer Schicht, die aus einem ersten Polymermaterial realisiert ist,
- einen Hals (9), der auf dem Hohlkörper (7) angeordnet ist und eine Öffnung (17) des Hohlkörpers (7) begrenzt, wobei der Hals (9) ausgebildet ist, um ein Schnittstellenteil (5, 10) aufzunehmen, das auf dem Hals (9) mit Hilfe eines Dichtungselements (19), das zwischen dem Hals (9) und dem Schnittstellenteil (5, 10) angeordnet ist, abdichtend angebracht ist, wobei der Hals (9) aus einem Verbundmaterial hergestellt ist, das ein zweites Polymermaterial aufweist,
wobei der Hals (9) mit dem Hohlkörper (7) durch molekulare Verschlingung von Polymerketten aus dem ersten Polymermaterial und von Polymerketten aus dem zweiten Polymermaterial verbunden ist,
wobei das Innengehäuse (3) **dadurch gekennzeichnet ist, dass** das Verbundmaterial aus dem zweiten, mit Verstärkungsfasern gefüllten Polymermaterial besteht und dass das Verbundmaterial eine Formbeständigkeit aufweist, die größer ist als die Formbeständigkeit des ersten Polymermaterials.

2. Innengehäuse (3) nach dem vorhergehenden Anspruch, wobei die Verstärkungsfasern ausgewählt sind aus der Gruppe umfassend Glasfasern, Kohlenstofffasern, Polymerfasern, Naturfasern, Fasern aus Metall, Fasern aus Metalllegierungen, Keramikfasern, Basaltfasern.

3. Innengehäuse (3) nach einem der vorhergehenden Ansprüche, wobei wenigstens ein Teil der Verstärkungsfasern eine textile Verstärkung (22) bilden.

4. Innengehäuse (3) nach einem der vorhergehenden Ansprüche, wobei:
- das erste Polymermaterial thermoplastisch, insbesondere semikristallin, ist und
- das zweite Polymermaterial thermoplastisch, insbesondere semikristallin, ist.

5. Innengehäuse (3) nach einem der vorhergehenden Ansprüche, wobei das erste Polymermaterial und das zweite Polymermaterial zu der gleichen Familie von Polymeren gehören, bevorzugt zu der Familie von Polymeren, ausgewählt aus der Gruppe umfassend die Familie der Polyamide (PA), die Familie der Polyphthalamide (PPA), die Familie der Polyolefine, die Familie der Polyketone (PK), die Familie der Polyacetale.

6. Innengehäuse (3) nach einem der vorhergehenden Ansprüche, wobei das zweite Polymermaterial mit dem ersten Polymermaterial identisch ist.

7. Innengehäuse (3) nach einem der vorhergehenden Ansprüche, wobei der Hohlkörper (7) eine Vielzahl von Schichten aufweist, wobei wenigstens eine Schicht aus dem ersten Polymermaterial hergestellt ist.

8. Verfahren zur Herstellung eines Innengehäuses (3) nach einem der vorhergehenden Ansprüche, das die folgenden Schritte aufweist:
- Anordnen eines Hohlkörpers (7), der mit einer Öffnung (17) versehen ist,
- Anordnen eines Halses (9), der ausgebildet ist, um eine Öffnung (17) des Hohlkörpers (7) zu begrenzen,
- Zusammenfügen des Halses (9) und des Hohlkörpers (7) durch Schweißen.

9. Verfahren zur Herstellung eines Innengehäuses (3) nach einem der Ansprüche 1 bis 7, das die folgenden Schritte aufweist:
- Anordnen einen Halses (9) in einem Formwerkzeug (23), wobei der Hals (9) ausgebildet ist, um die Öffnung (17) eines Hohlkörpers (7) zu begrenzen, wobei der Hals (9) aus einem Verbundmaterial hergestellt ist, das aus einem zweiten, mit Verstärkungsfasern gefüllten Polymermaterial besteht,
- Formen eines Hohlkörpers (7) durch Spritzgießen oder durch Rotationsformen eines ersten Polymermaterials in dem Formwerkzeug (23), wobei:
im Laufe des Spritzgießens oder des Rotationsformens das erste Polymermaterial einen Teil des Verbundmaterials des Halses (9) umgibt und das zweite Polymermaterial wenigstens teilweise beim Kontakt mit dem ersten Polymermaterial schmilzt, derart, dass nach dem Spritzgießen der Hals (9) von dem ersten Polymermaterial umspritzt ist und der Hals (9) mit dem Hohlkörper (7) durch molekulare Verschlingung von Polymerketten aus dem ersten Polymermaterial und von Polymerketten aus dem zweiten Polymermaterial verbunden ist.

10. Verfahren zur Herstellung eines Innengehäuses (3) nach einem der Ansprüche 1 bis 7, das die folgenden Schritte aufweist:
- Formen eines Hohlkörpers (7) in einem Formwerkzeug (23) durch Spritzgießen eines ersten Polymermaterials über eine erste Einspritzöffnung (29),
- gleichzeitig Mitformen in dem Formwerkzeug eines Halses (9), der eine Öffnung (17) des Hohlkörpers (7) begrenzt, durch Spritzgießen eines Verbundmaterials, das aus einem zweiten, mit Verstärkungsfasern gefüllten Polymermaterial besteht, über eine zweite Einspritzöffnung (37), derart, dass nach dem Formen der Hals (9) mit dem Hohlkörper (7) durch molekulare Verschlingung von Polymerketten aus dem ersten Polymermaterial und von Polymerketten aus dem zweiten Polymermaterial verbunden ist.

11. Verfahren zur Herstellung eines Innengehäuses (3) nach einem der Ansprüche 1 bis 7, das die folgenden Schritte aufweist:
- Anordnen von Verstärkungsfasern in einem Formwerkzeug (23), deren Oberfläche bevorzugt mit einem Kompatibilisierungsmittel, wie zum Beispiel einem Silan, behandelt ist, in einer Zone, die ausgebildet ist, um ein Hals (9) zu werden, der ausgebildet ist, um die Öffnung (17) eines Hohlkörpers (7) zu begrenzen,
- Formen eines Hohlkörpers (7) und eines Halses (9) durch Spritzgießen oder durch Rotationsformen oder durch Extrusionsblasformen, vorzugsweise durch Extrusionsblasformen, eines ersten Polymermaterials in dem Formwerkzeug (23).

12. Verfahren zur Herstellung eines Innengehäuses (3) nach einem der Ansprüche 1 bis 7, das die folgenden Schritte aufweist:
- Anordnen eines Halses (9) in einem Formwerkzeug (23), wobei der Hals (9) ausgebildet ist, um die Öffnung (17) eines Hohlkörpers (7) zu begrenzen, wobei der Hals (9) aus einem Verbundmaterial hergestellt ist, das aus einem zweiten, mit Verstärkungsfasern gefüllten Polymermaterial besteht,
- Formen eines Hohlkörpers (7) durch Extrusionsblasformen eines ersten Polymermaterials in dem Formwerkzeug (23), wobei:
im Laufe des Extrusionsblasformens das erste Polymermaterial einen Teil des Verbundmaterials des Halses (9) umgibt und das zweite Polymermaterial wenigstens teilweise beim Kontakt mit dem ersten Polymermaterial schmilzt, derart, dass nach dem Extrusionsblasformen der Hals (9) von dem ersten Polymermaterial umspritzt ist und der Hals (9) mit dem Hohlkörper (7) durch molekulare Verschlingung von Polymerketten aus dem ersten Polymermaterial und von Polymerketten aus dem zweiten Polymermaterial verbunden ist.

13. Verfahren zur Herstellung eines Innengehäuses (3) nach einem der Ansprüche 1 bis 7, das die folgenden Schritte aufweist:
- Anordnen einen Halses (9) in einem Formwerkzeug (23), wobei der Hals (9) ausgebildet ist, um die Öffnung (17) eines Hohlkörpers (7) zu begrenzen, wobei der Hals (9) aus einem Verbundmaterial hergestellt ist, das aus einem zweiten, mit Verstärkungsfasern gefüllten Polymermaterial besteht,
- Formen eines Hohlkörpers (7) durch Rotationsformen eines ersten Polymermaterials mit Hilfe eines Formwerkzeugs, das auf eine Temperatur erhitzt ist, die höher ist als die Schmelztemperatur des ersten Polymermaterials, wobei:
im Laufe des Rotationsformens das erste Polymermaterial einen Teil des Verbundmaterials des Halses (9) umgibt und wenigstens teilweise durch Erhitzen über das Formwerkzeug schmilzt, das zweite Polymermaterial wenigstens teilweise beim Kontakt mit dem ersten Polymermaterial und/oder beim Kontakt mit dem Formwerkzeug schmilzt, derart, dass nach dem Rotationsformen der Hals (9) von dem ersten Polymermaterial umspritzt ist und der Hals (9) mit dem Hohlkörper (7) durch molekulare Verschlingung von Polymerketten aus dem ersten Polymermaterial und von Polymerketten aus dem zweiten Polymermaterial verbunden ist.

14. Vorratstank (1) für Druckflüssigkeit für Kraftfahrzeug, bevorzugt für Wasserstoff, aufweisend:
- ein Innengehäuse (3) nach einem der Ansprüche 1 bis 7,
- eine Basis (5), die auf dem Hals (9) des Innengehäuses (3), außerhalb des Halses (9), angebracht ist,
- ein Dichtungselement (19), das zwischen dem Hals (9) und der Basis (5), bevorzugt radial, angeordnet ist,
- ein äußeres Verstärkungsgehäuse, das um das Innengehäuse (3) und die Basis (5) herum angebracht ist.

## Claims

1. Internal casing (3) for a tank (1) for storing pressurized fluid for a motor vehicle, comprising:
- a hollow body (7) comprising at least one layer made of a first polymer material,
- a neck (9) arranged on the hollow body (7) and delimiting an opening (17) of the hollow body (7), the neck (9) being designed to receive an interface part (5, 10) mounted on the neck (9) in a sealed manner by means of a gasket (19) arranged between the neck (9) and the interface part (5, 10), the neck (9) being made of a composite material comprising a second polymer material,
the neck (9) being joined to the hollow body (7) by molecular entanglement of polymer chains of the first polymer material and polymer chains of the second polymer material,
the internal casing (3) being **characterized in that**
the composite material is composed of the second polymer material loaded with reinforcing fibers, and **in that**
the composite material has a resistance to deformation that is greater than the resistance to deformation of the first polymer material.

2. Internal casing (3) according to the preceding claim, wherein the reinforcing fibers are chosen from the group comprising glass fibers, carbon fibers, polymer fibers, natural fibers, metal fibers, metal alloy fibers, ceramic fibers, basalt fibers.

3. Internal casing (3) according to either of the preceding claims, wherein at least some of the reinforcing fibers form a textile reinforcement (22).

4. Internal casing (3) according to any of the preceding claims, wherein:
- the first polymer material is thermoplastic, in particular semi-crystalline, and
- the second polymer material is thermoplastic, in particular semi-crystalline.

5. Internal casing (3) according to any of the preceding claims, wherein the first polymer material and the second polymer material are part of the same family of polymers, preferably from the family of polymers chosen from the group comprising the polyamide (PA) family, the polyphthalamide (PPA) family, the polyolefin family, the polyketone (PK) family, the polyacetal family.

6. Internal casing (3) according to any of the preceding claims, wherein the second polymer material is identical to the first polymer material.

7. Internal casing (3) according to any of the preceding claims, wherein the hollow body (7) comprises a plurality of layers, at least one layer being made of the first polymer material.

8. Method for manufacturing an internal casing (3) according to any of the preceding claims, which method comprises the following steps:
- providing a hollow body (7) having an opening (17),
- providing a neck (9) designed to delimit the opening (17) of the hollow body (7),
- assembling the neck (9) and the hollow body (7) by means of welding.

9. Method for manufacturing an internal casing (3) according to any of claims 1 to 7, which method comprises the following steps:
- arranging a neck (9) in a mold (23), the neck (9) being designed to delimit the opening (17) of a hollow body (7), the neck (9) being made of a composite material composed of a second polymer material loaded with reinforcing fibers,
- molding a hollow body (7) by injecting or by rotationally molding a first polymer material in the mold (23), wherein:
during injection or rotational molding, the first polymer material surrounds some of the composite material of the neck (9) and the second polymer material at least partially melts upon contact with the first polymer material, such that, after injection, the first polymer material is molded over the neck (9) and the neck (9) is joined to the hollow body (7) by molecular entanglement of polymer chains of the first polymer material and polymer chains of the second polymer material.

10. Method for manufacturing an internal casing (3) according to any of claims 1 to 7, which method comprises the following steps:
- molding a hollow body (7) in a mold (23) by injecting a first polymer material via a first injection hole (29),
- simultaneously co-molding in the mold a neck (9) delimiting an opening (17) of the hollow body (7) by injecting a composite material composed of a second polymer material loaded with reinforcing fibers via a second injection hole (37), such that, after molding, the neck (9) is joined to the hollow body (7) by molecular entanglement of polymer chains of the first polymer material and polymer chains of the second polymer material.

11. Method for manufacturing an internal casing (3) according to any of claims 1 to 7, which method comprises the following steps:
- arranging reinforcing fibers in a mold (23), said fibers preferably being surface-treated with a compatibilizer, for example a silane, in a region designed to become a neck (9) designed to delimit the opening (17) of a hollow body (7),
- molding a hollow body (7) and a neck (9) by injecting or by rotationally molding or by extrusion blow molding, preferably by extrusion blow molding, a first polymer material in the mold (23).

12. Method for manufacturing an internal casing (3) according to any of claims 1 to 7, which method comprises the following steps:
- arranging a neck (9) in a mold (23), the neck (9) being designed to delimit the opening (17) of a hollow body (7), the neck (9) being made of a composite material composed of a second polymer material loaded with reinforcing fibers,
- molding a hollow body (7) by extrusion blow molding a first polymer material (23), wherein:
during extrusion blow molding, the first polymer material surrounds some of the composite material of the neck (9) and the second polymer material at least partially melts upon contact with the first polymer material, such that, after extrusion blow molding, the first polymer material is molded over the neck (9) and the neck (9) is joined to the hollow body (7) by molecular entanglement of polymer chains of the first polymer material and polymer chains of the second polymer material.

13. Method for manufacturing an internal casing (3) according to any of claims 1 to 7, which method comprises the following steps:
- arranging a neck (9) in a mold (23), the neck (9) being designed to delimit the opening (17) of a hollow body (7), the neck (9) being made of a composite material composed of a second polymer material loaded with reinforcing fibers,
- molding a hollow body (7) by rotationally molding a first polymer material using a mold heated to a temperature above the melting point of the first polymer material, wherein:
during rotational molding, the first polymer material surrounds some of the composite material of the neck (9) and melts at least partially by being heated via the mold, the second polymer material melts at least partially upon contact with the first polymer material and/or upon contact with the mold, such that, after rotational molding, the first polymer material is molded over the neck (9) and the neck (9) is joined to the hollow body (7) by molecular entanglement of polymer chains of the first polymer material and polymer chains of the second polymer material.

14. Storage tank (1) for pressurized fluid for a motor vehicle, preferably for hydrogen, comprising:
- an internal casing (3) according to any of claims 1 to 7,
- a base (5) attached to the neck (9) of the internal casing (3), on the outside of the neck (9),
- a gasket (19) arranged between the neck (9) and the base (5), preferably radially,
- an external reinforcing casing attached around the internal casing (3) and the base (5).
